(19)

**Europäisches Patentamt**

**European Patent Office**

**Office européen des brevets**

(11)   **EP 2 104 925 B1**

(12)   **FASCICULE DE BREVET EUROPEEN**

(45) Date de publication et mention
de la délivrance du brevet:
**24.04.2013   Bulletin 2013/17**

(21) Numéro de dépôt: **08761735.3**

(22) Date de dépôt: **03.01.2008**

(51) Int Cl.:
***G06T 1/00*** *(2006.01)*

(86) Numéro de dépôt international:
**PCT/FR2008/000011**

(87) Numéro de publication internationale:
**WO 2008/099080 (21.08.2008 Gazette 2008/34)**

(54) **PROCÉDÉ ET DISPOSITIFS POUR INSÉRER EN TEMPS RÉEL DES OBJETS VIRTUELS DANS UN FLUX D'IMAGES À PARTIR DE DONNÉES ISSUES DE LA SCÈNE RÉELLE REPRÉSENTÉE PAR CES IMAGES**

VERFAHREN UND VORRICHTUNG ZUR ECHTZEITEINBETTUNG VON VIRTUELLEN OBJEKTEN IN EINEN BILDSTROM MITHILFE VON DATEN AUS EINER ECHTEN SZENE, DIE VON DEN BILDERN DARGESTELLT WIRD

METHOD AND DEVICE FOR THE REAL TIME IMBEDDING OF VIRTUAL OBJECTS IN AN IMAGE STREAM USING DATA FROM A REAL SCENE REPRESENTED BY SAID IMAGES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **05.01.2007   FR 0752547**

(43) Date de publication de la demande:
**30.09.2009   Bulletin 2009/40**

(60) Demande divisionnaire:
**10165722.9 / 2 237 231**

(73) Titulaire: **Total Immersion**
**92150 Suresnes (FR)**

(72) Inventeurs:
• **LEFEVRE, Valentin**
  **F-92800 Puteaux (FR)**
• **LIVET, Nicolas**
  **F-75011 Paris (FR)**
• **SAVARY, Alan**
  **F-94220 Charenton Le Pont (FR)**

(74) Mandataire: **Santarelli**
**14 Avenue de la Grande Armée**
**B.P. 237**
**75822 Paris Cedex 17 (FR)**

(56) Documents cités:
**US-A1- 2002 095 081   US-A1- 2004 179 104**
**US-A1- 2004 179 107**

• **CONAN V ET AL: "Two-step fusion method for augmented reality" PROCEEDINGS OF THE SPIE - THE INTERNATIONAL SOCIETY FOR OPTICAL ENGINEERING SPIE-INT. SOC. OPT. ENG USA, vol. 3206, 1997, pages 106-115, XP002438950**
• **NEUMANN U ET AL: "AUGMENTED REALITY TRACKING IN NATURAL ENVIRONMENTS" MIXED REALITY. MERGING REAL AND VIRTUAL WORLDS., 1999, pages 101-130, XP001118695**
• **STATE A ET AL: "SUPERIOR AUGMENTED REALITY REGISTRATION BY INTEGRATING LANDMARK TRACKING AND MAGNETIC TRACKING" COMPUTER GRAPHICS PROCEEDINGS 1996 (SIGGRAPH). NEW ORLEANS, 4 août 1996 (1996-08-04), pages 429-438, XP000682759**
• **RONALD T AZUMA: "A Survey of Augmented Reality" PRESENCE, CAMBRIDGE, MA, US, août 1997 (1997-08), pages 1-48, XP002254668**
• **NEUMANN U ET AL: "AUGMENTED REALITY TRACKING IN NATURAL ENVIRONMENTS", MIXED REALITY. MERGING REAL AND VIRTUAL WORLDS. PROCEEDINGS OFINTERNATIONAL SYMPOSIUM ON MIX REALITY. MERGING REAL AND VIRTUALWORLDS, XX, XX, 1 January 1999 (1999-01-01), pages 101-130, XP001118695,**

• STATE A ET AL: "SUPERIOR AUGMENTED REALITY REGISTRATION BY INTEGRATING LANDMARK TRACKING AND MAGNETIC TRACKING", COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 August 1996 (1996-08-04), pages 429-438, XP000682759,

• BAJURA M ET AL: "DYNAMIC REGISTRATION CORRECTION IN AUGMENTED-REALITY SYSTEMS", PROCEEDINGS OF THE VIRTUAL REALITY ANNUAL INTERNATIONAL SYMPOSIUM. RESEARCH TRIANGLE PARK, MAR. 11 - 15, 1995; [PROCEEDINGS OF THE VIRTUAL REALITY ANNUAL INTERNATIONAL SYMPOSIUM], LOS ALAMITOS, IEEE COMP. SOC. PRESS, US, 11 March 1995 (1995-03-11), pages 189-196, XP000529985, ISBN: 978-0-7803-2543-2

**Description**

La présente invention concerne la combinaison d'images réelles et virtuelles, aussi appelée réalité augmentée, et plus particulièrement un procédé et des dispositifs pour insérer en temps réel des objets virtuels dans une représentation d'une scène réelle à partir de données de position et d'orientation issues de cette scène.

Pour suivre un objet dans une application de réalité augmenté, il est possible de combiner un suivi basé sur l'utilisation d'un capteur électromagnétique avec un traitement de contours dans des images, comme décrit dans le document intitulé « Two-step fusion method for augmented reality » (Vania Conan and Pascal Bisson, SPIE Vol. 3206). Plus précisément, ce document décrit un système pour déterminer la position d'une caméra montée sur un casque porté par un utilisateur. L'analyse d'images obtenues par cette caméra, comprenant des objets statiques modélisés, permet de déterminer la position de la caméra par rapport à ces objets. Pour améliorer l'estimation de cette position, un capteur de position est également fixé au casque. Le capteur de position est utilisé pour donner une position approximative qui permet ensuite, par analyse d'images, d'obtenir une pose précise, l'analyse d'images étant plus simple et plus précise lorsqu'une position approximative est connue.

De façon similaire, la demande de brevet US 2004/0179104 décrit un système de navigation utilisant la réalité augmenté selon lequel des images capturées sont utilisées pour générer des informations d'orientation d'une caméra à partir d'informations d'orientation estimées par un capteur lié à cette caméra. La demande de brevet US 2004/0179107 décrit un capteur d'orientation dont les performances sont améliorées par analyse d'images. À ces fins, le capteur d'orientation est couplé à une caméra et est utilisé pour obtenir une orientation initiale qui est ensuite mise à jour par analyse d'images.

De même, dans les documents intitulés « Augmented reality tracking in natural environments » (Ulrich Neumann, Suya You, Youngkwan Cho, Jongweon Lee et Jun Park) et « Superior augmented reality registration by integrating landmark trasking and magnetic tracking » (A. State et al., Computer graphics proceedings, annual conference séries, 1996), les auteurs décrivent des systèmes d'estimation de poses de caméras auxquelles sont fixés des capteurs. Ces derniers permettent d'obtenir une première estimation de pose des caméras, ces poses étant ensuite affinées ou corrigées par analyse d'images.

L'effet de miroir utilisant une caméra et un écran de visualisation est utilisé dans de nombreuses applications, notamment dans le domaine des jeux vidéo. Le principe de cette technologie consiste à acquérir une image en provenance d'une caméra de type *webcam* reliée à un ordinateur ou à une console. Cette image est de préférence stockée dans la mémoire du système auquel la caméra est reliée. Ensuite, un algorithme de suivi d'objet, aussi appelé *blobs tracking,* est utilisé pour calculer, en temps réel, les contours de certains éléments tels que la tête et les mains de l'utilisateur. La position de ces formes dans l'image permet de modifier ou de déformer certaines parties de l'image affichée. Cette solution permet de localiser une zone de l'image selon deux degrés de liberté.

Pour déterminer la position et l'orientation selon lesquelles un objet virtuel doit être inséré dans une image représentant une scène réelle, une solution consiste à indiquer dans la scène réelle la position et l'orientation de l'objet virtuel. Une sphère peut être utilisée à cette fin. La taille de la sphère doit être suffisante pour permettre le calcul de sa position dans un espace tridimensionnel selon la position de celle-ci dans une représentation bidimensionnelle de cet espace et selon son diamètre apparent. L'orientation de la sphère peut être évaluée en plaçant des pastilles colorées sur la surface de celle-ci. Cette solution est efficace si la sphère a une taille suffisamment importante et si le système de capture d'image est de suffisamment bonne qualité, ce qui restreint les possibilités de mouvement de l'utilisateur, en particulier ses déplacements rapides.

Ces solutions n'offrent cependant pas les performances requises pour de nombreuses applications et il existe un besoin d'améliorer les performances de tels systèmes tout en maintenant leur prix à un niveau acceptable.

L'invention permet de résoudre au moins un des problèmes exposés précédemment.

L'invention a ainsi pour objet un procédé pour insérer en temps réel dans au moins une image d'un flux d'images représentant une scène réelle, appelée première image, au moins une image extraite d'au moins une représentation tridimensionnelle d'au moins un objet virtuel, appelée seconde image, ce procédé étant caractérisé en ce qu'il comprend les étapes suivantes,

- réception de ladite au moins une première image dudit flux d'images ;
- détermination de la position et l'orientation dudit au moins un objet virtuel dans ladite scène réelle selon des données de position et d'orientation d'un objet réel issues de ladite scène réelle, au moins une partie desdites données étant reçue d'au moins un capteur présent dans ladite scène réelle et une autre partie desdites données étant de position et d'orientation étant issue de ladite première image acquise ;
- extraction de ladite au moins une seconde image de ladite représentation tridimensionnelle dudit au moins un objet virtuel selon lesdites position et orientation dudit au moins un objet virtuel ; et,
- insertion de ladite au moins une seconde image extraite dans ladite au moins une première image acquise selon ladite position dudit au moins un objet.

Le procédé selon l'invention permet ainsi de déterminer précisément en temps réel la position à laquelle doivent être insérés le ou les objets virtuels ainsi que l'orientation selon laquelle ce ou ces objets virtuels doivent être représentés. La position et l'orientation des objets virtuels sont définies selon six degrés de liberté. La précision et le temps de calcul permettent des applications de réalité augmentée telles que des jeux vidéo dans lesquelles les gestes des utilisateurs sont suivis, même si les utilisateurs ont des mouvements rapides. Cette solution permet une grande liberté de mouvement. Un capteur de position et d'orientation à six degrés de liberté fiable et économique est ainsi formé.

Selon un mode de réalisation particulier, au moins une desdites données d'orientation est reçue d'un capteur angulaire présent dans ladite scène réelle.

Toujours selon un mode de réalisation particulier, au moins une desdites données de position est reçue d'un capteur de position présent dans ladite scène réelle.

Avantageusement, au moins une desdites données de position et d'orientation est extraite de ladite première image acquise à partir d'un élément géométrique singulier associé audit capteur permettant de localiser avec précision l'emplacement où doivent être insérés le ou les objets virtuels.

Toujours selon un mode de réalisation particulier, le procédé comprend en outre les étapes suivantes,

- segmentation de ladite première image acquise ;
- extraction des contours d'au moins dudit élément géométrique singulier dans ladite première image segmentée ; et,
- détermination de la position dudit élément géométrique singulier selon lesdits contours extraits de ladite première image segmentée.

La mise en oeuvre de ces étapes permet d'améliorer la localisation de l'élément géométrique singulier dans l'image issu du flux d'image. De façon avantageuse, la position dudit élément singulier dans la scène réelle est déterminée par la position dudit élément singulier dans ladite première image et par la taille apparente dudit élément singulier dans ladite première image.

Selon un mode de réalisation particulier, le procédé comprend en outre une étape d'estimation de ladite position dudit objet. Ladite étape d'estimation de ladite position dudit objet virtuel utilise de préférence un filtre passe-bas.

L'invention a aussi pour objet un programme d'ordinateur comprenant des instructions adaptées à la mise en oeuvre de chacune des étapes du procédé décrit précédemment.

L'invention a également pour objet des moyens de stockage d'informations, amovible ou non, partiellement ou totalement lisible par un ordinateur ou un microprocesseur comportant des instructions de code d'un programme d'ordinateur pour l'exécution de chacune des étapes du procédé décrit précédemment.

L'invention a également pour objet un dispositif de réalité augmentée pouvant être connecté à au moins une caméra vidéo et à au moins un écran de visualisation, ledit dispositif comprenant des moyens adaptés à mettre en oeuvre chacune des étapes du procédé décrit précédemment.

Le dispositif selon l'invention permet ainsi de déterminer précisément en temps réel la position à laquelle doivent être insérés le ou les objets virtuels ainsi que l'orientation selon laquelle ce ou ces objets virtuels doivent être représentés, selon six degrés de liberté, pour des applications de réalité augmentée.

D'autres avantages, buts et caractéristiques de la présente invention ressortent de la description détaillée qui suit, faite à titre d'exemple non limitatif, au regard des dessins annexés dans lesquels :

- la figure 1 représente schématiquement un premier dispositif selon l'invention ;
- la figure 2 montre un exemple d'appareil permettant d'implémenter au moins partiellement l'invention ;
- la figure 3 illustre schématiquement un exemple de dispositif dans lequel un capteur à six degrés de liberté est utilisé ;
- la figure 4 illustre un exemple de la poignée présenté sur la figure 3 comprenant un capteur à six degrés de liberté et un contacteur de type « gâchette » ;
- la figure 5, comprenant les figures 5a et 5b, illustre un exemple de mise en oeuvre du dispositif illustré par les figures 3 et 4 ;
- la figure 6 illustre schématiquement le dispositif de l'invention ;
- la figure 7, comprenant les figures 7a, 7b et 7c, illustre un exemple de poignée utilisée. La figure 7a illustre une vue d'ensemble de la poignée tandis que les figures 7b et 7c représentent des exemples de schéma électrique de cette poignée ;
- la figure 8 illustre certaines étapes de l'algorithme utilisé pour déterminer la position 3D d'un élément géométrique dans une représentation d'une scène réelle ;
- la figure 9 représente la variation du coefficient de pondération $\alpha$ utilisé pour pondérer la saturation en fonction de la luminance lors de la conversion d'une image ; et,
- la figure 10 illustre le principe utilisé pour déterminer la distance entre une sphère et une caméra à partir d'une image issue de cette caméra.

Selon l'invention, les données relatives au positionnement et/ou à l'orientation de l'objet virtuel devant être inséré dans une représentation d'une scène réelle sont issues au moins partiellement d'un capteur situé dans la scène réelle.

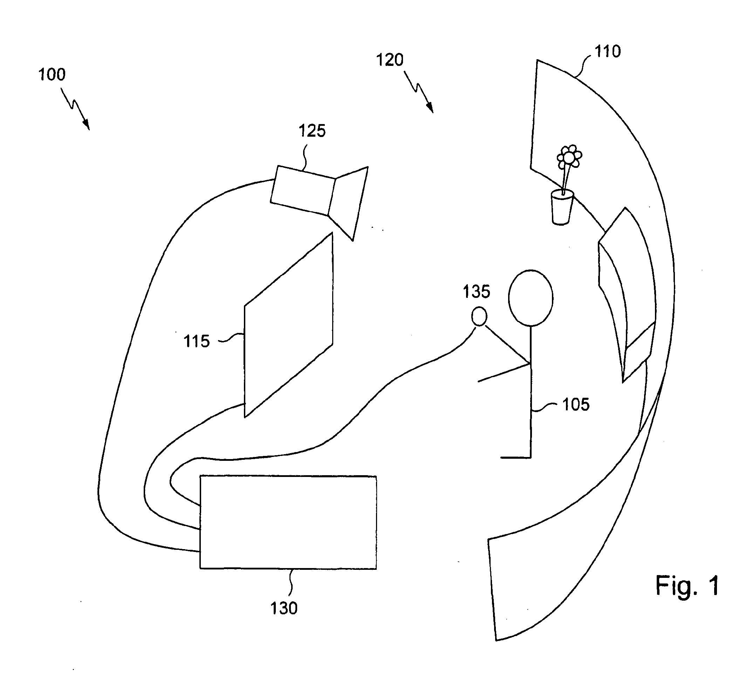

La figure 1 illustre une représentation schématique d'un premier dispositif 100 selon l'invention. Un utilisateur 105 est de préférence situé dans un environnement 110 pouvant comporter divers éléments tels que des meubles et des plantes, face à un écran 115 ayant un rôle de miroir. L'image projetée sur l'écran 115 est l'image modifiée de la scène réelle 120, filmée par la caméra vidéo 125. Le flux vidéo issu de la caméra 125 est transmis à un ordinateur 130 qui retransmet le flux vidéo issu de la caméra 125 à l'écran 115 après l'avoir modifié. L'ordinateur 130 a en particulier le rôle d'insérer un ou plusieurs objets virtuels, animés ou non, dans les images du flux vidéo issu de la caméra 125. La position et l'orientation de l'objet virtuel sont déterminées dans la scène réelle 120 au moins partiellement par un capteur 135 relié à l'ordinateur 130.

Le capteur 135 peut être un capteur à 6 degrés de liberté permettant de déterminer une position et une orientation (X,Y, Z, cap, tangage, roulis) dans la scène réelle 120. A titre d'illustration, ce capteur peut être le capteur « Fastrack » de la société Polhemus (Fastrack est une marque déposée). Dans un mode de réalisation de l'invention, le capteur 135 est un capteur à 3 degrés de liberté permettant de déterminer une orientation (cap, tangage, roulis), la position du capteur (X, Y, Z) étant déterminée par analyse visuelle des images issues de la caméra 125.

Le système 100 est ainsi constitué des éléments suivants :

- un écran de visualisation (par exemple un écran LCD (*Liquid cristal display*), un écran plasma ou un écran de projection vidéo) ;
- un capteur permettant de définir une orientation selon trois degrés de liberté et optionnellement un capteur permettant de définir une position selon trois degrés de liberté ;
- une caméra vidéo située, de préférence, proche de l'écran et dans l'axe de celui-ci pour éviter des effets de parallaxe ;
- un ordinateur (par exemple un ordinateur de type PC, ou *Personal Computer)* en charge des opérations suivantes,

  - acquisition vidéo en temps réel du signal vidéo en provenance de la caméra (le signal vidéo peut être, par exemple, un signal au format PAL (*Phase Alternated Line*), NTSC (*National Television System Committee*), YUV (*Luminance-Bandwidth-Chrominance*), YUV-HD (*Luminance-Bandwidth-Chrominance High Definition*), SDI (*Serial Digital Interface*) ou HD-SDI (*High Definition Serial Digital Interface*) transmis, par exemple, selon une connexion HDMI (*High-Definition Multimedia Interface*) ou USB/USB2 (*Universal Serial Bus*)) ;
  - acquisition en temps réel du flux de données en provenance du capteur de mouvement et, selon le mode de réalisation, du capteur de position ;
  - génération d'images de réalité augmentée, en temps réel, via la sortie de la carte graphique de l'ordinateur (cette sortie peut être, par exemple, du type VGA (*Video Graphics Array*), DVI (*Digital Visual Interface*), HDMI, SDI, HD-SDI, YUV, YUV-HD) ; et,
  - opérer, de préférence, une symétrie sur l'image finale de telle sorte que le bord gauche de l'image devienne le bord droit afin de restituer l'effet « miroir ».

L'ordinateur comprend une application de réalité augmentée telle que le logiciel D'Fusion de la société Total Immersion (D'Fusion est une marque de la société Total Immersion) pour générer une scène de réalité augmentée interactive à l'aide, par exemple, des fonctions suivantes :

- acquisition en temps réel du flux de données de mouvement ; et,
- ajout en temps réel de représentations bidimensionnelles d'objets de synthèse tridimensionnels dans le flux vidéo issu de la caméra et transmission du flux vidéo modifié à l'écran de visualisation.

Le principe de ce type d'application est décrit dans la demande de brevet WO 2004/012445.

Le logiciel D'Fusion permet ainsi de visualiser en temps réel les objets de synthèse selon la position et l'orientation déterminées. L'utilisateur peut également interagir avec d'autres objets virtuels insérés dans le flux vidéo.

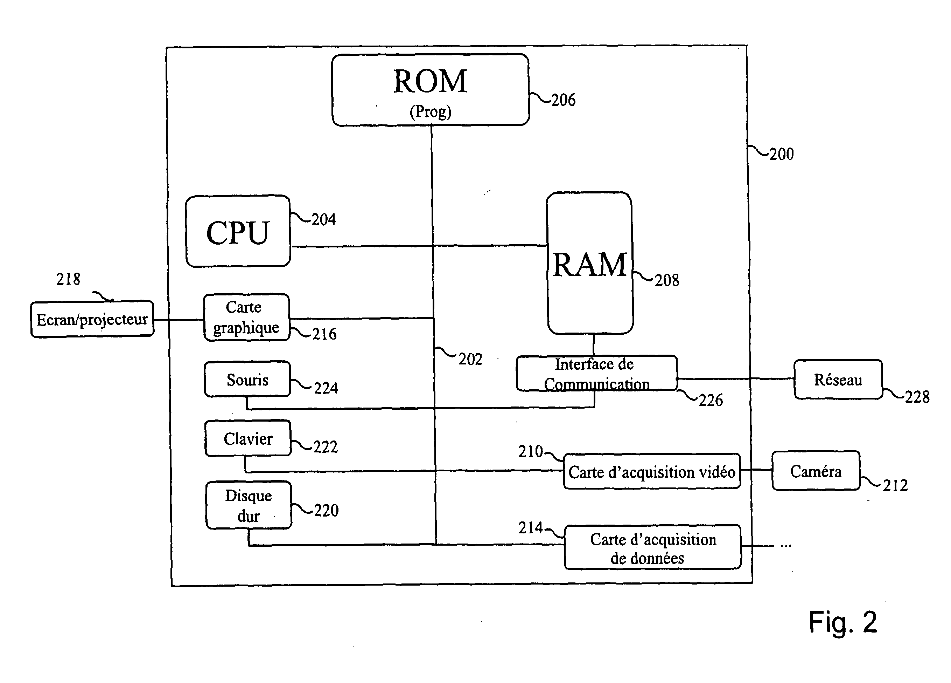

Un appareil mettant en oeuvre l'invention ou une partie de l'invention est illustré sur la figure 2. L'appareil 200 est par exemple un micro-ordinateur, une station de travail ou une console de jeux.

L'appareil 200 comporte de préférence un bus de communication 202 auquel sont reliés :

- une unité centrale de traitement ou microprocesseur 204 (CPU, *Central Processing Unit*) ;
- une mémoire morte 206 (ROM, *Read Only Memory*) pouvant comporter le système d'exploitation et des programmes tels que "Prog" ;
- une mémoire vive ou mémoire cache 208 (RAM, *Random Access Memory*) comportant des registres adaptés à enregistrer des variables et paramètres créés et modifiés au cours de l'exécution des programmes précités ;

- une carte d'acquisition vidéo 210 reliée à une caméra 212 ;
- une carte d'acquisition de données 214 reliée à un capteur (non représenté) ; et,
- une carte graphique 216 reliée à un écran ou à un projecteur 218.

Optionnellement, l'appareil 200 peut également disposer des éléments suivants :

- un disque dur 220 pouvant comporter les programmes "Prog" précités et des données traitées ou à traiter selon l'invention ;
- un clavier 222 et une souris 224 ou tout autre dispositif de pointage comme un crayon optique, un écran tactile ou une télécommande permettant à l'utilisateur d'interagir avec les programmes selon l'invention ;
- une interface de communication 226 reliée à un réseau de communication distribué 228, par exemple le réseau Internet, l'interface étant apte à transmettre et à recevoir des données ; et,
- un lecteur de cartes mémoires (non représenté) adapté à y lire ou à y écrire des données traitées ou à traiter selon l'invention.

Le bus de communication permet la communication et l'interopérabilité entre les différents éléments inclus dans l'appareil 200 ou reliés à lui. La représentation du bus n'est pas limitative et, notamment, l'unité centrale est susceptible de communiquer des instructions à tout élément de l'appareil 200 directement ou par l'intermédiaire d'un autre élément de l'appareil 200.

Le code exécutable de chaque programme permettant à l'appareil programmable de mettre en oeuvre les processus selon l'invention, peut être stocké, par exemple, dans le disque dur 220 ou en mémoire morte 206.

Selon une variante, le code exécutable des programmes pourra être reçu par l'intermédiaire du réseau de communication 228, via l'interface 226, pour être stocké de façon identique à celle décrite précédemment.

Les cartes mémoires peuvent être remplacées par tout support d'information tel que, par exemple, un disque compact (CD-ROM ou DVD). De manière générale, les cartes mémoires peuvent être remplacées par des moyens de stockage d'information, lisibles par un ordinateur ou par un microprocesseur, intégrés ou non à l'appareil, éventuellement amovibles, et adaptés à mémoriser un ou plusieurs programmes dont l'exécution permet la mise en oeuvre du procédé selon l'invention.

De manière plus générale, le ou les programmes pourront être chargés dans un des moyens de stockage de l'appareil 200 avant d'être exécutés.

L'unité centrale 204 va commander et diriger l'exécution des instructions ou portions de code logiciel du ou des programmes selon l'invention, instructions qui sont stockées dans le disque dur 220 ou dans la mémoire morte 206 ou bien dans les autres éléments de stockage précités. Lors de la mise sous tension, le ou les programmes qui sont stockés dans une mémoire non volatile, par exemple le disque dur 220 ou la mémoire morte 206, sont transférés dans la mémoire vive 208 qui contient alors le code exécutable du ou des programmes selon l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

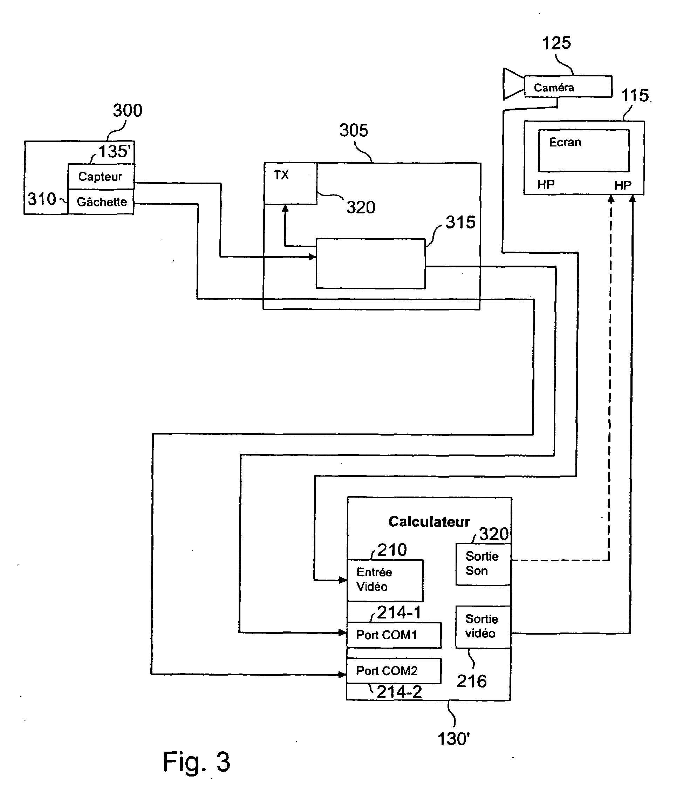

La figure 3 illustre schématiquement un exemple du dispositif mentionné précédemment dans lequel un capteur à six degrés de liberté est utilisé. Selon cet exemple, un écran 115 et une caméra 125 sont connectés à un ordinateur 130'. Une poignée 300 est également reliée à l'ordinateur 130' via un boîtier 305. La caméra vidéo 125 est de préférence une caméra vidéo munie d'une optique grand angle pour permettre à l'utilisateur d'être proche de l'écran. La caméra vidéo 125 est par exemple une caméra Sony HDR HC1 équipée d'un objectif Sony VCLHG0737Y.

L'ordinateur 130' comprend une carte d'acquisition vidéo 210 reliée à la caméra vidéo 125, une carte graphique 216 reliée à l'écran 115, un premier port de communication 214-1 (COM1) relié au capteur de position et d'orientation de la poignée 300 via le boîtier 305 et un second port de communication 214-2 (COM2) relié à un contacteur de type « gâchette » de la poignée 300, de préférence via le boîtier 305. Par contacteur de type « gâchette » il doit être compris un interrupteur permettant d'ouvrir ou de fermer le circuit électrique correspondant de façon ponctuelle en exerçant une pression sur la gâchette. L'utilisation d'un tel contacteur permet d'accroître l'interactivité entre l'utilisateur et le logiciel de l'ordinateur 130'. Le contacteur 310 permet, par exemple, de simuler un tir dans un logiciel de jeu. La carte d'acquisition vidéo est, par exemple, une carte Decklink PCIe. La carte graphique est une carte graphique 3D permettant d'insérer des images de synthèse dans un flux vidéo, par exemple une carte ATI X1800XL ou une carte ATI 1900XT. Bien que l'exemple illustré utilise deux ports de communication (COM1 et COM2), il doit être compris que d'autres interfaces de communication peuvent être utilisées entre l'ordinateur 130' et la poignée 300.

L'ordinateur 130' comprend avantageusement une carte son 320 reliée à des haut-parleurs (HP) intégrés dans l'écran 115. La liaison entre la carte d'acquisition vidéo 210 et la caméra vidéo 125 peut être établie selon l'une des normes suivantes : vidéo composite, SVideo, HDMI, YUV, YUV-HD, SDI, HD-SDI ou USB/USB2. De même, la liaison entre la carte graphique 216 et l'écran 115 peut être établie selon l'une des normes suivantes : vidéo composite, Svideo, YUV, YUV-HD, SDI, HD-SDI, HDMI, VGA. La liaison entre les ports de communication 214-1 et 214-2, le capteur et le contacteur de type « gâchette » de la poignée 300 peut être du type RS-232. L'ordinateur 130' est, par exemple, un PC standard équipé d'un processeur Intel Pentium IV ayant une fréquence de 3GHz, de 3Gbyte de mémoire RAM, d'un disque dur de 120Gbyte et de deux interfaces PCI express (*Peripheral Component Interconnect*) pour la carte d'acquisition et pour la carte graphique.

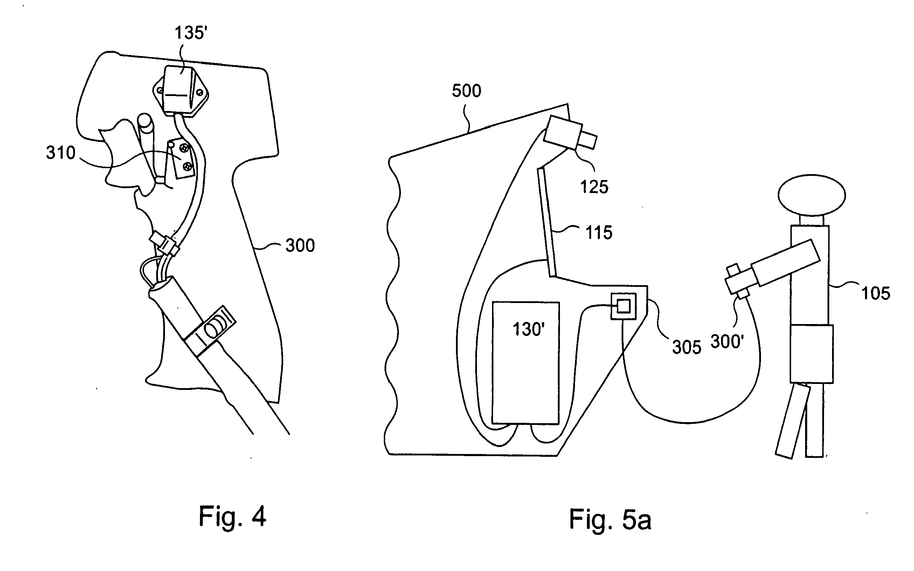

La poignée 300 comprend de préférence un capteur de position ou d'orientation , et un contacteur de type « gâchette » 310. Un exemple de la poignée 300 est illustré sur la figure 4.

Le boîtier 305 constitue une interface entre la poignée 300 et l'ordinateur 130'. Le boîtier 305, associé au capteur de position ou d'orientation, a pour objet de transformer les signaux issus du capteur en données exploitables par l'ordinateur 130'. Le boîtier 305 comprend un module 315 de capture de mouvement et, avantageusement, un émetteur 320 permettant une transmission sans fil des signaux du capteur 135' au boîtier 305.

La figure 4 illustre un exemple de poignée 300 comprenant le capteur 135' et le contacteur de type « gâchette » 310. La poignée 300 est typiquement un pistolet utilisé pour des jeux d'arcade en salle, tel que le pistolet optique de calibre 45 commercialisé par la société Happ aux Etats-Unis d'Amérique. Le canon du pistolet est avantageusement supprimé pour obtenir une poignée et l'électronique d'origine est supprimée pour ne garder que le contacteur de type « gâchette » 310. Le capteur de position ou d'orientation 135' est inséré dans la poignée. Le fil du capteur ainsi que le fil de la gâchette sont insérés dans la gaine électrique de liaison entre la poignée et le boîtier de capture 305. Un connecteur de type DB9 est avantageusement disposé à l'autre extrémité de la gaine électrique de sorte que lorsque l'utilisateur appuie sur la gâchette, le contacteur se ferme, et les broches 8 et 7 du port série sont reliées entre elles via une résistance de 4,7 K $\Omega$.

Alternativement, la gaine électrique est supprimée et un module de communication sans fil est inséré dans la poignée 300. Selon cette alternative, les données issues du capteur 135' sont transmises au boîtier 305 sans liaison filaire. Le contacteur de type « gâchette » est alors inactif à moins de la coupler également à un module de communication sans fil.

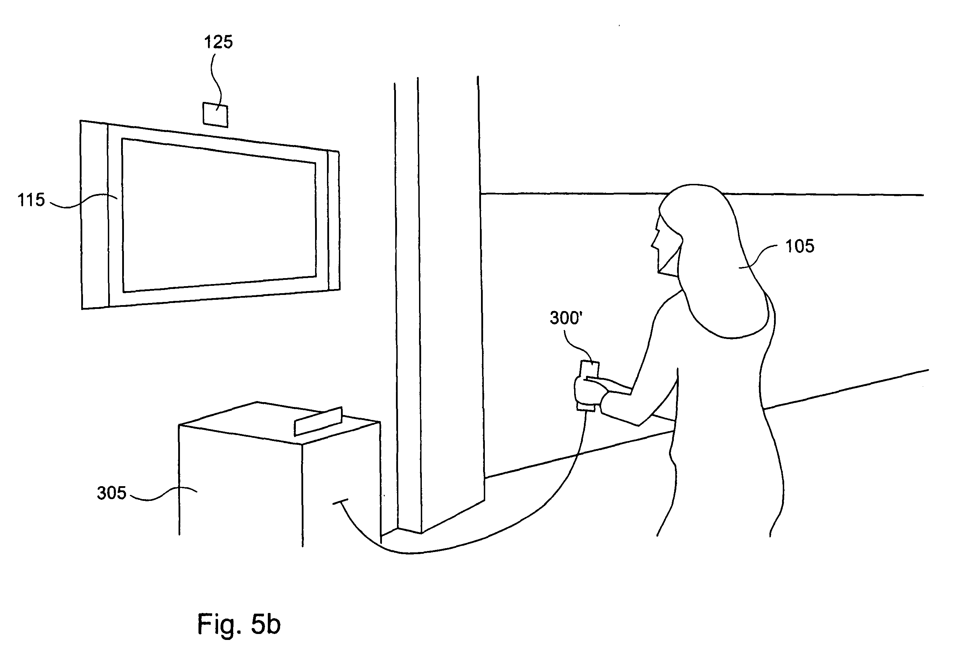

La figure 5, comprenant les figures 5a et 5b, illustre un exemple de mise en oeuvre du dispositif illustré par les figures 3 et 4 (selon lequel les données sont transmises par une liaison filaire entre la poignée et le boîtier de capture de mouvement). La figure 5a représente une vue de côté, en coupe, du dispositif tandis que la figure 5b illustre une vue en perspective de ce dispositif. Selon cet exemple, un utilisateur 105 se trouve face à un dispositif 500 comprenant un écran 115 situé, de préférence, face à l'utilisateur 105 et approximativement à la hauteur de ses yeux. Le dispositif 500 comprend également une caméra vidéo 125 située à proximité de l'écran 125, un boîtier de capture de mouvement 305 et un ordinateur 130' auquel sont reliés la caméra vidéo 125, l'écran 115 et le boîtier de capture de mouvement 305 tel qu'indiqué précédemment. Dans cet exemple, l'utilisateur 105 dispose d'une poignée 300' reliée au boîtier de capture de mouvement 305 par une liaison filaire.

Selon un mode de réalisation particulier, un fond de couleur uniforme, par exemple un fond bleu ou un fond vert, est placé derrière l'utilisateur. Ce fond uniforme est utilisé par le logiciel pour « détourer » l'utilisateur, c'est-à-dire pour extraire celui-ci des images issues de la caméra vidéo 115, et pour l'incruster dans une scène de synthèse ou dans un flux vidéo secondaire. Pour insérer l'utilisateur dans une scène de synthèse, le logiciel D'Fusion utilise sa capacité à effectuer une fonction de *chroma key* (incrustation d'une seconde image dans une première selon une couleur identifiée dans la première) en temps réel grâce à une fonction de *pixel shader* (nuanceur de pixels) qui effectue des traitements sur le flux vidéo en provenance de la caméra.

Alors que le dispositif décrit précédemment donne toute satisfaction en terme de résultat, le capteur de position et d'orientation à six degrés de liberté a un prix qui peut le rendre prohibitif pour un usage personnel. Pour surmonter cet inconvénient, l'usage d'un capteur de mouvement bon marché combiné avec un module de traitement d'image permet d'obtenir la position et l'orientation du capteur selon six degrés de liberté.

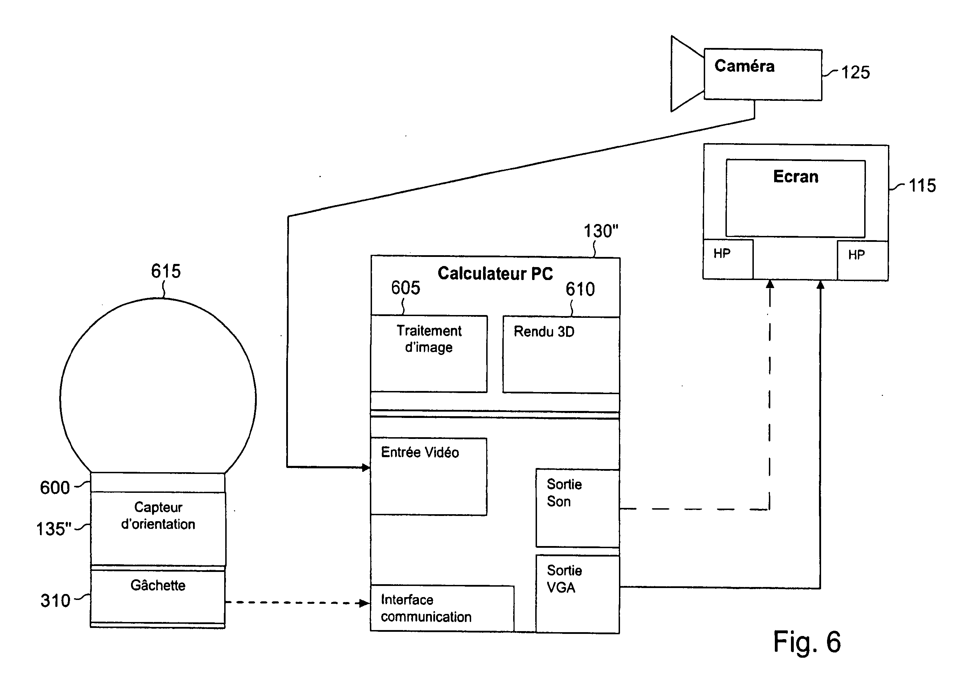

La figure 6 illustre schématiquement le dispositif selon ce mode de réalisation. Le dispositif comprend un ordinateur 130" connecté à un écran 115, une caméra vidéo 125 et une poignée 600. L'ordinateur 130" se distingue de l'ordinateur 130' en particulier en ce qu'il comprend un module de traitement d'image 605 adapté à déterminer la position de la poignée 600. Le module de rendu vidéo 610 est similaire à celui présent dans l'ordinateur 130' (non représenté) et peut également utiliser le logiciel D'Fusion. Les caractéristiques des ordinateurs 130' et 130" sont similaires. Un logiciel équivalent au logiciel D'Fusion peut être utilisé pour combiner les flux vidéo avec des objets virtuels (module de rendu 3D 610), et capturer les informations de position de la poignée par analyse d'image (module de traitement d'image 605). La caméra vidéo 125 peut être similaire à la caméra vidéo présentée précédemment ou peut être une simple *webcam.*

La poignée 600 est avantageusement reliée à l'ordinateur 130" par une liaison sans fil, sans boîtier de capture de mouvement. La poignée 600 comprend un capteur d'orientation 135" capable de déterminer l'orientation de la poignée 600 selon trois degrés de liberté. Le capteur d'orientation 135" est, par exemple, le capteur angulaire MT9B de la société Xsens ou le capteur angulaire Inertia Cube 3 de la société Intersense, dans sa version filaire ou non filaire. Les données d'orientation issues du capteur peuvent être transmises via un port COM ou par un protocole spécifique sans fil. De préférence, un ou plusieurs contacteurs de type « gâchette » 310 sont présent dans la poignée 600. La poignée 600 comprend également un élément géométrique ayant une forme particulière, permettant de localiser la poignée 600 lorsque celle-ci est visible sur une image. Cette forme géométrique est, par exemple, une sphère colorée dont le diamètre est de quelques centimètres. Cependant, d'autres formes peuvent être utilisées, notamment un cube, un plan ou un polyèdre. La poignée 600 est de préférence crantée obligeant l'utilisateur à la tenir selon une direction prédéterminée (les doigts se positionnent selon le crantage) pour permettre un positionnement cohérent du capteur angulaire.

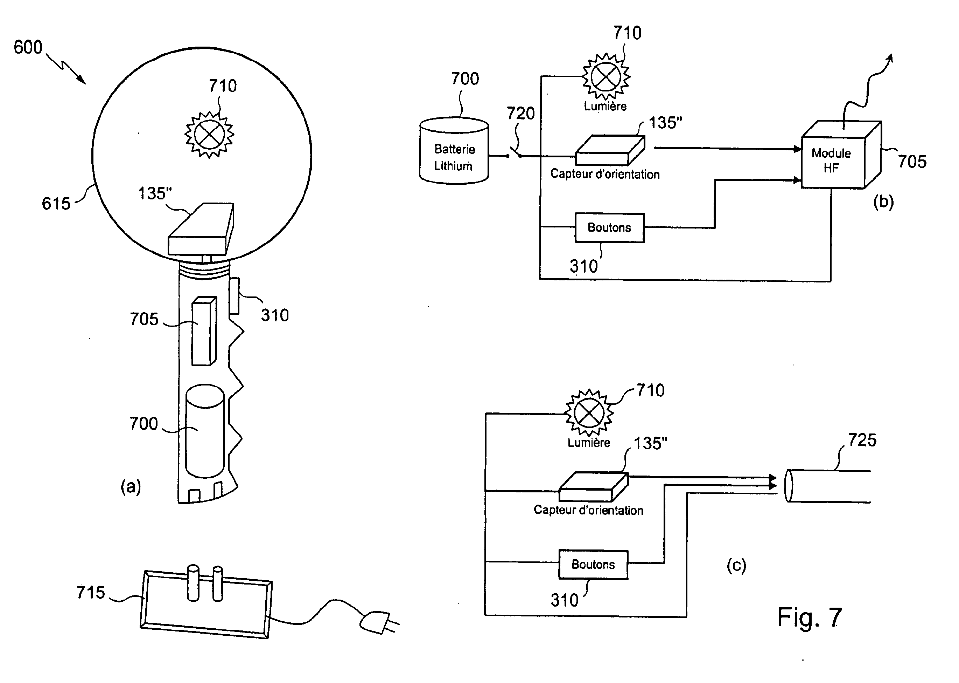

La figure 7, comprenant les figures 7a, 7b et 7c, illustre un exemple de poignée 600. La figure 7a illustre une vue d'ensemble de la poignée 600 tandis que les figures 7b et 7c représentent le schéma électrique de cette poignée.

Comme illustré, la poignée 600 comprend une partie inférieure, aussi appelée le manche, prévue pour être tenue par l'utilisateur à l'intérieure de laquelle se trouve une batterie 700, par exemple une batterie au lithium, un module de communication sans fil 705 et les contacteurs de type « gâchette » 310. Le capteur angulaire 135" est de préférence fixé sur la partie supérieure du manche. La partie supérieure du manche comprend avantageusement un filetage sur son pourtour permettant le montage de l'élément géométrique utilisé pour identifier la position de la poignée. Dans cet exemple, l'élément géométrique est la sphère 615 qui comprend une ouverture adaptée à être vissée sur la partie supérieure du manche. Il doit être compris que d'autres moyens de fixation de l'élément géométrique sur le manche peuvent être utilisés tels que le collage ou l'emboîtage. De façon avantageuse, une source de lumière telle qu'une ampoule ou une LED (*light-emitting diode*) est disposée à l'intérieur de la sphère 615 qui est de préférence constituée dans un matériau transparent ou translucide. Cette source lumineuse ainsi que l'ensemble des composants électriques de la poignée 600 sont activés à la demande de l'utilisateur ou, par exemple, dès que la poignée 600 est détachée du support 715 utilisé pour le rangement de la poignée et, avantageusement, pour le chargement de la batterie 700. Dans ce cas, le support 700 est connecté à une source électrique.

La figure 7b illustre le schéma électrique d'un premier montage des éléments électrique de la poignée 600. La batterie 700 est reliée au capteur d'orientation 135", au contacteur de type « gâchette » 310, au module de transmission sans fil 705 et à la source de lumière 710 pour leur fournir une alimentation électrique. Avantageusement, un interrupteur 720 est disposé à la sortie de la batterie 700 pour permettre de couper ou d'activer l'alimentation électrique du capteur d'orientation 135", du contacteur de type « gâchette » 310, au module de transmission sans fil 705 et de la source de lumière 710. L'interrupteur 720 peut être commandé manuellement par l'utilisateur ou automatiquement, par exemple lorsque la poignée 600 est extraite du support 715. Il est également possible de modifier le schéma de connexion de la batterie 700 pour que l'interrupteur ne contrôle que certains des éléments précités. Il est également possible d'utiliser plusieurs interrupteurs pour contrôler indépendamment ces éléments pour permettre, par exemple, d'utiliser la poignée 600 sans activer la source lumineuse 710.

Le capteur d'orientation 135" et le contacteur de type « gâchette » 310 sont reliés au module de transmission sans fil 705 pour transférer les informations issues du capteur 135" et du contacteur 310 à l'ordinateur 130". Le module de transmission sans fil 705 est par exemple un module haute fréquence (HF) tel qu'un module Bluetooth ou WiFi. Un module de communication sans fil correspondant est relié à l'ordinateur 130" pour recevoir les signaux émis par la poignée 600. Ce module peut être connecté à l'ordinateur 130" à l'aide, par exemple, d'une interface USB/USB2 ou RS-232.

Alternativement, si une liaison filaire est utilisée entre la poignée 600 et l'ordinateur 130", la poignée 600 ne nécessite ni le module de communication sans fil 715 ni la batterie 700, l'ordinateur pouvant alimenter la poignée 600 en électricité. Cette alternative est illustrée sur la figure 7c. Dans ce mode de réalisation, une gaine 725 comprenant des fils pour alimenter la poignée 600 et pour transmettre les signaux issus du capteur 135" et du contacteur 310 relie la poignée 600 à l'ordinateur 130".

La poignée 600 permet d'éviter une incertitude quant à l'orientation relative de la main par rapport à celle du capteur grâce à l'utilisation d'un crantage sur la poignée. L'élément géométrique utilisé pour déterminer la position de la poignée est aisément visible dans une image tout en permettant un grand nombre de mouvements à l'utilisateur. Cet élément géométrique peut être facilement démonté pour permettre de changer sa couleur et sa forme. Enfin, la présence d'une source lumineuse placée dans l'élément géométrique ou sur sa surface permet d'améliorer le suivi de cet objet dans des mauvaises conditions d'éclairage.

Pour déterminer la position de la poignée, l'ordinateur 130" analyse les images issues de la caméra vidéo ou de la *webcam* 125 sur lesquelles est présent l'élément géométrique de la poignée 600. Dans cette étape, il est essentiel de trouver avec précision la position du centre de l'élément géométrique dans les images issues de la caméra utilisé. La solution utilisée est basée sur un nouvel espace de couleur et une nouvelle approche de filtrage pour améliorer la qualité des résultats obtenus.

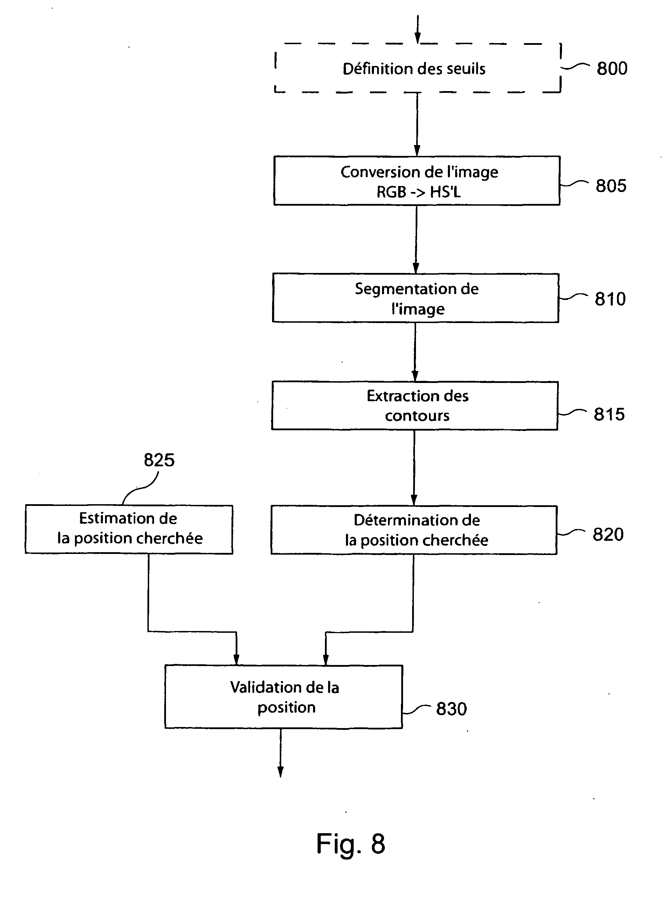

Certaines étapes de l'algorithme de recherche de la position de l'élément géométrique dans une image, illustrées sur la figure 8, sont les suivantes :

- définition de seuils selon la couleur de l'élément géométrique (étape 800). Comme indiqué par l'utilisation de lignes pointillées, il n'est pas nécessaire de définir les seuils utilisés chaque fois qu'un élément géométrique est cherché dans une image. Ces seuils peuvent être prédéterminés lors du paramétrage de la poignée et/ou réévalués si nécessaire ;

- conversion de l'image RGB (*Red-Green-Blue*) vers un espace couleur de type HS'L (étape 805), dérivé de l'espace couleur de type HSL (*Hue-Saturation-Luminance*) et recherche par segmentation de l'image des régions de pixels qui correspondent à la couleur de l'élément géométrique (étape 810) ;
- reconstruction des contours de ces régions et recherche de celle qui se rapproche le plus de la forme de l'élément géométrique à traquer (étape 815) ; et,
- évaluation des dimensions de l'objet dans l'image afin de retrouver sa profondeur en fonction des dimensions mesurées initialement, recherche et calcul de la position du centre de l'élément géométrique dans l'image (étape 820).

Pour améliorer la précision des résultats obtenus, il est préférable d'estimer la position recherchée de façon théorique (étape 825) par extrapolation linéaire de la position de l'élément géométrique dans le temps et de comparer la position estimée avec la position obtenue par analyse d'image (étape 830).

Le principe de détermination de la position de l'élément géométrique consiste, dans un premier temps, à détecter les zones de l'image dont la couleur correspond à celle de l'élément géométrique recherché. Pour s'affranchir de la variabilité de luminosité, l'espace de couleur HSL est préféré à l'espace de couleur RGB.

Après avoir converti une image RGB en image HSL, tous les pixels sont sélectionnés et les pixels dont la luminance L n'est pas dans un intervalle prédéfini $[\theta L_{inf} ; \theta L_{sup}]$ sont désélectionnés. La désélection d'un pixel peut être réalisées, par exemple, en imposant des valeurs nulles pour la luminance L, la saturation S et la teinte H. Ainsi, tous les pixels sélectionnés ont des valeurs non nulles tandis que les pixels désélectionnés ont des valeurs nulles.

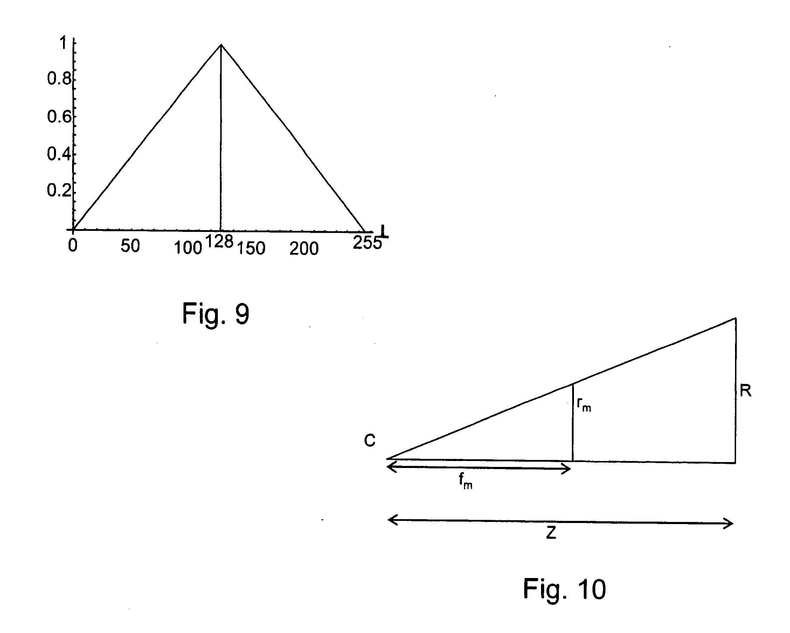

La segmentation d'une image utilisant un espace de couleur HSL donne des résultats qui ne sont pas entièrement satisfaisants en raison du fait qu'un pixel très sombre ou très clair (mais ni noir, ni blanc) peut avoir quasi n'importe quelle valeur de teinte (et en changer rapidement à cause du bruit généré dans l'image lors de l'acquisition) et donc avoir une teinte proche de celle recherchée. Pour éviter cet inconvénient, l'espace de couleur HSL est modifié pour ne pas prendre en compte les pixels trop sombres ou trop clairs. Pour cela, une nouvelle saturation S' est créée. La saturation S' est dérivée de la saturation S à l'aide d'un coefficient de pondération $\alpha$ lié la luminance L selon la relation suivante $S' = \alpha S$. Le coefficient de pondération $\alpha$ a de préférence une valeur comprise entre zéro et un. La figure 9 illustre la valeur du coefficient de pondération $\alpha$ en fonction de la luminance.

Les pixels dont la saturation S' n'est pas supérieure à un seuil prédéfini $\theta S'_{inf}$ sont ensuite désélectionnés. De même, les pixels dont la teinte H ne correspond pas à la teinte de l'élément géométrique, c'est-à-dire les pixels n'appartenant pas à un intervalle $[\theta H_{inf} ; \theta H_{sup}]$ prédéterminé selon la teinte de l'élément géométrique, sont désélectionnés. Il convient de noter que la teinte est en théorie exprimée en degré, variant de 0 à 360°. En effet, la teinte est une notion cyclique le « rouge » étant au deux extrémités (0 et 360). D'un point de vue pratique 360 ne pouvant pas être codé sur un octet, la valeur de la teinte est recodée, selon les applications visées, sur les intervalles [0,180[, [0,240[ ou [0,255]. Pour optimiser le coût de calcul, l'intervalle [0,180[ est préféré. Il convient cependant de noter que la perte engendrée par le changement d'échelle n'a pas d'effet important sur les résultats.

La désélection des pixels est de préférence réalisée selon l'ordre luminance L, saturation S' puis teinte H. Cependant, la phase essentielle est la segmentation selon la teinte H. La segmentation selon la luminance et la saturation permet d'améliorer la qualité du résultat ainsi que les performances globales, notamment en ce qu'elle permet d'optimiser le temps de calcul.

Une partie de la sélection des pixels de l'image représente l'élément géométrique. Pour identifier cette partie, une étape d'extraction de contours est mise en oeuvre. Cette phase consiste à extraire les contours des groupes de pixels non nuls en utilisant, par exemple, un masque de convolution. Il convient de noter ici qu'il existe de nombreux algorithmes d'extraction de contours.

Il est ensuite nécessaire de déterminer parmi les contours celui qui se rapproche le plus de la forme de l'élément géométrique utilisé, ici un contour circulaire, l'élément géométrique utilisé étant une sphère.

Tous les contours dont la taille, exprimée en nombre de pixels, est trop faible pour représenter un cercle de taille exploitable sont désélectionnés. Cette sélection est réalisée selon un seuil $\theta_T$ prédéterminé. De même, tous les contours dont l'aire, également exprimée en nombre de pixels, est trop faible sont supprimés. Cette sélection est à nouveau réalisée selon un seuil $\theta_A$ prédéterminé.

Ensuite, pour chacun des contours restants, le cercle de rayon minimal englobant le contour est calculé puis le ratio entre l'aire déterminée par le contour et le rayon du cercle calculé est évalué. Il est alors considéré que le contour cherché est celui offrant le plus grand ratio. Ce ratio tend à représenter le fait que le contour rempli au maximum le cercle qui l'englobe et donc favorise simultanément les contours à tendance circulaire et les contours de plus fort rayon. Ce critère présente l'avantage d'un coût de calcul relativement faible. Naturellement, le critère de sélection doit être adapté à la forme de l'élément géométrique.

Les segmentations colorimétriques et géométriques permettent d'obtenir un cercle représentant approximativement la projection de la sphère associée à la poignée dans l'image. Un avantage de cette solution est que si la forme et la couleur de l'élément géométrique sont uniques dans l'environnement, la reconnaissance de cette forme est robuste aux occlusions partielles.

La position de l'élément géométrique dans l'espace dans lequel il se trouve est ensuite déterminée à partir de sa projection dans l'image. Pour simplifier les calculs il est ici supposé que l'élément géométrique est situé sur l'axe optique de la caméra dont est issue l'image. En réalité, la projection d'une sphère donne en générale une ellipse. Le cercle n'est obtenu que lorsque la sphère se situe sur l'axe optique. Cependant, une telle approximation est suffisante pour déterminer la position de la sphère grâce à son rayon apparent par un simple rapport de proportionnalité.

La figure 10 illustre le principe utilisé pour déterminer la distance de la sphère. C est le centre optique, c'est-à-dire le centre de projection correspondant à la position de la caméra, R est le rayon physique de la sphère située à une distance Z de la caméra. Par projection, ce rayon R est transformé en un rayon apparent $r_m$ situé sur le plan écran à une distance $f_m$ qui représente la distance focale métrique. Il en résulte, selon le théorème de Thalès, la relation suivante,

$$\frac{f_m}{Z} = \frac{r_m}{R} \text{ soit, } Z = R \cdot \frac{f_m}{r_m}$$

Il convient par ailleurs de noter que le ratio $\frac{f_m}{r_m}$ est égal au ratio $\frac{f_p}{r_p}$ où $f_p$ est la focale exprimée en pixel et $r_p$ est le rayon apparent de la sphère également exprimé en pixels. Il s'en déduit la relation suivante,

$$Z = \left(f_p \cdot R\right) \cdot \frac{1}{r_p}$$

La projection d'un point de coordonnées (x, y, z) dans un repère dont l'origine est la caméra en coordonnées (u, v) dans l'image prise par la caméra s'exprime de la façon suivante,

$$\begin{cases} u = f_p \cdot \dfrac{x}{z} + p_x \\ v = f_p \cdot \dfrac{y}{z} + p_y \end{cases}$$

où $(p_x, p_y)$ est la position, en pixels, du centre optique dans l'image. Cette relation permet d'en déduire les coordonnées réelles X et Y de la sphère lorsque sa coordonnée réelle Z et ses coordonnées u et v dans l'image, en pixels, sont connues,

$$\begin{cases} X = \left(u - p_x\right) \cdot \dfrac{Z}{f_p} \\ Y = \left(v - p_y\right) \cdot \dfrac{Z}{f_p} \end{cases}$$

Il est important de noter que la qualité de l'estimation du rayon de la sphère a une grande influence sur la qualité du positionnement Z qui, par conséquent, influe sur la qualité du positionnement X et Y (qui sont de surcroît aussi influencés par la qualité de la position 2D estimée du cercle). Cette erreur en Z peut être grande métriquement mais aussi visuellement car l'objet virtuel associé au capteur est en général plus gros que la sphère et, par conséquent, une erreur par surestimation du rayon démultiplie d'autant la taille apparente de l'objet virtuel inséré dans l'image que cet objet est plus grand (métriquement) que la sphère.

Un problème important dans la recherche de la position réelle de l'élément géométrique vient du manque de stabilité temporelle de la position (u, v) et du rayon du cercle estimés. Ce problème se traduit en effet par une vibration importante de la position X, Y et Z de l'objet virtuel associé au capteur. Pour filtrer ces vibrations, un filtrage particulier est utilisé.

Ce filtrage est basé sur le principe qu'une prédiction à base de filtre passe-bas peut être réalisée et que si cette prédiction est assez proche de la nouvelle mesure alors cette valeur filtrée est appliquée. Dès que la prédiction s'écarte de la mesure, une phase « attentiste » est mise en oeuvre pour vérifier si l'écart n'existe que sur une image isolée du flux vidéo ou si cet écart se confirme dans le temps. La valeur filtrée issue de la prédiction est appliquée. Si le premier écart est confirmé la valeur réelle de la mesure est appliquée avec un retard d'une image dans le flux vidéo. Le filtrage passe-bas est réalisé en utilisant une régression linéaire orthogonale (la régression quadratique orthogonale apportant des résultats de moindre qualité) sur les n dernières mesures (en excluant celles considérées comme anormales). La valeur de n est variable avec une valeur qui augmente jusqu'à un seuil prédéterminé tant que les prédictions sont conformes. Dès qu'une prédiction n'est plus conforme, suite à une variation confirmée par l'image suivante, la valeur de n chute à 4 pour un filtrage minimal. Cette technique permet une meilleur réactivité du filtrage et part du principe que les vibrations sont d'autant plus visibles que le rayon est censé être plutôt constant. Par contre, en mouvement, les vibrations sont peu perceptibles et il est donc possible de diminuer la latence.

Les équation suivantes détaillent le calcul de régression orthogonale linéaire avec une droite d'équation $y = ax + b$, avec x correspondant à la valeur de la trame courante et y à la valeur des 3 paramètres u, v, et le rayon apparent de la sphère, devant être filtrer, chacun indépendamment.

L'erreur entre le régression orthogonale linéaire et la mesure du point $p_i(x_i, y_i)$ peut s'exprimer sous forme de la relation suivante,

$$e_i = (ax_i + b) - y_i$$

Il est ainsi nécessaire de minimiser l'erreur quadratique totale E qui peut s'exprimer selon la relation suivante,

$$E = \sum_{i=1}^{n} e_i^2 = \sum_{i=1}^{n} \left[ (ax_i + b) - y_i \right]^2 = \sum_{i=1}^{n} \left[ (ax_i + b)^2 - 2(ax_i + b)y_i + y_i^2 \right]$$

en posant,

$$sx2 = \sum_{i=1}^{n} x_i^2 \,, \ sx = \sum_{i=1}^{n} x_i \,, \ sxy = \sum_{i=1}^{n} x_i y_i \,, \ sy = \sum_{i=1}^{n} y_i \ \text{et} \ sy2 = \sum_{i=1}^{n} y_i^2$$

il en résulte que,

$$E = a^2 sx2 + 2absx + b^2 n - 2asxy - 2bsy + sy2$$

La fonction E étant une fonction quadratique, elle admet son minimum lorsque,

$$\begin{cases} \dfrac{\partial E}{\partial a} = 0 \\ \dfrac{\partial E}{\partial b} = 0 \end{cases}$$

Par conséquent,

$$\left\{ \begin{array}{l} a = \dfrac{(sxy \cdot n - sx \cdot sy)}{\det} \\ b = \dfrac{(sx2 \cdot sy - sx \cdot sxy)}{\det} \end{array} \right\}$$

avec det = $six2 \cdot n - sx^2$

Pour chaque image du flux vidéo issu de la caméra, les valeurs a et b sont estimées afin de prédire une valeur pour les coordonnées (u, v) et pour le rayon apparent de la sphère, afin d'en déduire les coordonnées (x, y, z) de la sphère dans la scène réelle. Ces valeurs estimées sont utilisées comme référence et sont comparées aux valeurs déterminées selon l'analyse de l'image comme décrit précédemment. Selon le résultat de la comparaison, les valeurs déterminées selon l'analyse de l'image sont utilisées à la place des valeurs prédites ou non.

Lorsque la position et l'orientation de l'objet virtuel sont déterminées dans la scène réelle, le logiciel de réalité augmentée, par exemple D'Fusion, détermine l'image de l'objet virtuel devant être insérée à partir du modèle tridimensionnel de cet objet. Cette image de l'objet virtuel est ensuite insérée dans l'image de la scène réelle.

Le processus de détermination de la position et de l'orientation de l'objet virtuel dans la scène réelle, de détermination de l'image de l'objet virtuel et d'insertion de l'image de l'objet virtuel dans une image de la scène réelle est répété pour chaque image du flux vidéo issu de la caméra.

Le logiciel de réalité augmentée peut également être couplé à un jeu permettant ainsi à l'utilisateur de se voir « dans » le jeu.

Naturellement, pour satisfaire des besoins spécifiques, une personne compétente dans le domaine de l'invention pourra appliquer des modifications dans la description précédente. En particulier, il n'est pas impératif d'utiliser un capteur, présent dans la scène réelle, ayant au moins trois degrés de liberté. La seule contrainte est que les données issues du capteur soient complémentaires des données issues de l'analyse d'image. Il est ainsi possible d'utiliser, par exemple, un capteur ayant deux degrés de liberté et d'obtenir les informations liées aux quatre autres degrés de liberté par analyse d'image. De même, la poignée comprenant le capteur de position et d'orientation peut prendre d'autres formes que celles décrites.

## Revendications

1. Procédé pour insérer en temps réel dans au moins une image d'un flux d'images représentant une scène réelle (120), appelée première image, au moins une image extraite d'au moins une représentation tridimensionnelle d'au moins un objet virtuel, appelée seconde image, ce procédé étant **caractérisé en ce qu'**il comprend les étapes suivantes,

   - réception de ladite au moins une première image dudit flux d'images ;
   - détermination de la position et l'orientation dudit au moins un objet virtuel dans ladite scène réelle selon des données de position et d'orientation d'un objet réel issues de ladite scène réelle, au moins une partie desdites données étant reçue d'au moins un capteur (135) présent dans ladite scène réelle et au moins une autre partie desdites données de position et d'orientation étant issue de ladite première image acquise (605) ;
   - extraction de ladite au moins une seconde image de ladite représentation tridimensionnelle dudit au moins un objet virtuel selon lesdites position et orientation dudit au moins un objet virtuel ; et,
   - insertion de ladite au moins une seconde image extraite dans ladite au moins une première image acquise selon ladite position dudit au moins un objet (610).

2. Procédé selon la revendication 1 **caractérisé en ce que** ladite au moins une première image est issue d'une caméra, ledit au moins un capteur étant mobile par rapport à ladite caméra.

3. Procédé selon la revendication 1 ou la revendication 2 **caractérisé en ce qu'**au moins une desdites données d'orientation est reçue d'un capteur angulaire (135', 135") présent dans ladite scène réelle.

4. Procédé selon l'une quelconque des revendications précédentes **caractérisé en ce qu'**au moins une desdites données de position est reçue d'un capteur de position (135') présent dans ladite scène réelle.

5. Procédé selon l'une quelconque des revendications précédentes **caractérisé en ce qu'**au moins une desdites données de position et d'orientation est extraite de ladite première image acquise à partir d'un élément géométrique singulier (615) associé audit capteur.

6. Procédé selon la revendication 5 **caractérisé en ce qu'**il comprend en outre les étapes suivantes,

   - segmentation de ladite première image acquise (810) ;
   - extraction des contours d'au moins dudit élément géométrique singulier dans ladite première image segmentée (815) ; et,
   - détermination de la position dudit élément géométrique singulier selon lesdits contours extraits de ladite première image segmentée (820).

7. Procédé selon la revendication précédente comprenant en outre une étape de conversion (805) de ladite première image dans un espace comprenant des composantes de teinte, de saturation et de luminance.

8. Procédé selon la revendication 6 ou la revendication 7 **caractérisé en ce que** la position dudit élément singulier dans la scène réelle est déterminée par la position dudit élément singulier dans ladite première image et par la taille apparente dudit élément singulier dans ladite première image.

9. Procédé selon l'une quelconque des revendications 5 à 8 selon lequel ledit élément singulier est une sphère.

10. Procédé selon l'une quelconque des revendications 5 à 9 **caractérisé en ce qu'**il comprend en outre une étape d'estimation de ladite position dudit objet virtuel (825).

11. Procédé selon la revendication 10 **caractérisé en ce que** ladite étape d'estimation de ladite position dudit objet virtuel utilise un filtre passe-bas.

12. Programme d'ordinateur comprenant des instructions adaptées à la mise en oeuvre de chacune des étapes du procédé selon l'une quelconque des revendications précédentes.

13. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 11.

14. Dispositif de réalité augmentée pouvant être connecté à au moins une caméra vidéo et à au moins un écran de visualisation, ledit dispositif comprenant des moyens adaptés à mettre en oeuvre chacune des étapes du procédé selon l'une quelconque des revendications 1 à 11.

15. Dispositif selon la revendication 14 comprenant des moyens pour mémoriser ladite au moins une première image dudit flux d'images (210) et des moyens pour mémoriser ladite représentation tridimensionnelle dudit au moins un objet virtuel.

**Claims**

1. Method for inserting in real time in at least one image, called first image, of a stream of images representing a real scene (120) at least one image, called second image, extracted from at least one three-dimensional representation of at least one virtual object, this method being **characterized in that** it includes the following steps:

   - reception of said at least one first image from said image stream;
   - determination of the position and the orientation of said at least one virtual object in said real scene from position and orientation data of a real object from said real scene, at least a portion of said data being received from at least one sensor (135) present in said real scene and at least another portion of said position and orientation data coming from said first acquired image (605);
   - extraction of said at least one second image from said three-dimensional representation of said at least one virtual object according to said position and said orientation of said at least one virtual object; and
   - insertion of said at least one extracted second image in said at least one acquired first image according to said position of said at least one object (610).

2. Method according to claim 1 **characterized in that** said at least one first image is from a camera, said at least one sensor being mobile relative to said camera.

3. Method according to claim 1 or claim 2 **characterized in that** at least some of said orientation data is received from an angular sensor (135', 135") present in said real scene.

4. Method according to any of the preceding claims **characterized in that** at least some of said position data is received from a position sensor (135') present in said real scene.

5. Method according to any one of the preceding claims **characterized in that** at least some of said position and orientation data is extracted from said acquired first image from a singular geometrical element (615) associated with said sensor.

6. Method according to claim 5 **characterized in that** it further includes the following steps:

   - segmentation of said acquired first image (810);
   - extraction of the edges of at least said singular geometrical element in said segmented first image (815); and
   - determination of the position of said singular geometrical element according to said contours extracted from said segmented first image (820).

7. Method according to the preceding claim further including a step of converting (805) said first image into a space comprising hue, saturation and lightness.

8. Method according to claim 6 or claim 7 **characterized in that** the position of said singular element in said real scene is determined by the position of said singular element in said first image and by the apparent size of said singular element in said first image.

9. Method according to any one of claims 5 to 8 in which said singular element is a sphere.

10. Method according to any one of claims 5 to 9 **characterized in that** it further includes a step of estimation of said position of said virtual object (825).

11. Method according to claim 10 **characterized in that** said step of estimation of said position of said virtual object uses a low-pass filter.

12. Computer program comprising instructions adapted to implement each of the steps of the method according to any one of the preceding claims.

13. Removable or non-removable information storage means partly or completely readable by a computer or a microprocessor containing code instructions of a computer program for executing each of the steps of the method according to any of claims 1 to 11.

14. Augmented reality device that can be connected to at least one video camera and to at least one display screen, said device including means adapted to execute each of the steps of the method according to any of claims 1 to 11.

15. Device according to claim 14 including means for storing said at least one first image from said image stream (210) and means for storing said three-dimensional representation of said at least one virtual object.

**Patentansprüche**

1. Verfahren, um in Echtzeit in zumindest ein Bild, das sogenannte erste Bild, eines eine reale Szene (120) darstellenden Bilderstroms zumindest ein Bild, das sogenannte zweite Bild, einzufügen, das aus einer dreidimensionalen Darstellung von zumindest einem virtuellen Objekt extrahiert wurde, wobei dieses Verfahren
**dadurch gekennzeichnet ist, dass**
es die nachfolgenden Schritte umfasst:

   - Empfangen des zumindest einen ersten Bildes des Bilderstroms;

- Bestimmen der Position und der Orientierung des zumindest einen virtuellen Objekts in der realen Szene nach Positions- und Orientierungsdaten eines realen Objekts, die von der realen Szene stammen, wobei zumindest ein Teil der Daten von zumindest einem Sensor (135) empfangen wird, der in der realen Szene vorhanden ist, und zumindest ein weiterer Teil der genannten Positions- und Orientierungsdaten von dem erfassten ersten Bild (605) stammt;
- Extraktion des zumindest einen zweiten Bildes der dreidimensionalen Darstellung des zumindest einen virtuellen Objekts gemäß der Position und Orientierung des zumindest einen virtuellen Objekts, und
- Einfügen des zumindest einen extrahierten zweiten Bildes in das erfasste zumindest eine erste Bild gemäß der Position des zumindest einen Objekts (610).

2. Verfahren nach Anspruch 1,
**dadurch gekennzeichnet, dass**
das zumindest eine erste Bild von einer Kamera stammt, wobei der zumindest eine Sensor bezüglich der Kamera beweglich ist.

3. Verfahren nach Anspruch 1 oder Anspruch 2,
**dadurch gekennzeichnet, dass**
zumindest eine der Orientierungsdaten von einem in der realen Szene vorhandenen Winkelsensor (135', 135") empfangen wird.

4. Verfahren nach einem der vorangehenden Ansprüche,
**dadurch gekennzeichnet, dass**
zumindest eine der Positionsdaten von einem in der realen Szene vorhandenen Positionssensor (135', 135") empfangen wird.

5. Verfahren nach einem der vorangehenden Ansprüche,
**dadurch gekennzeichnet, dass**
zumindest eine der Positions- und Orientierungsdaten von dem erfassten ersten Bild ausgehend von einem geometrischen Sonderelement (615) extrahiert wird, das dem Sensor zugeordnet ist.

6. Verfahren nach Anspruch 5,
**dadurch gekennzeichnet, dass**
es ferner die nachfolgenden Schritte umfasst:

- Segmentierung des erfassten ersten Bildes (810);
- Extraktion der Konturen zumindest von dem geometrischen Sonderelement aus dem segmentierten ersten Bild (815); und
- Bestimmung der Position des geometrischen Sonderelements nach den extrahierten Konturen des segmentierten ersten Bildes (820).

7. Verfahren nach dem vorangehenden Anspruch, das ferner einen Schritt der Konvertierung (805) des ersten Bildes in einen Raum mit Komponenten von Farbton, Farbsättigung und Leuchtdichte umfasst.

8. Verfahren nach Anspruch 6 oder Anspruch 7,
**dadurch gekennzeichnet, dass**
die Position des Sonderelements in der realen Szene durch die Position des Sonderelements in dem ersten Bild und durch die sichtbare Größe des Sonderelements in dem ersten Bild bestimmt wird.

9. Verfahren nach einem der Ansprüche 5 bis 8, wobei das Sonderelement eine Kugel ist.

10. Verfahren nach einem der Ansprüche 5 bis 9,
**dadurch gekennzeichnet, dass**
es ferner einen Schritt des Abschätzens der Position des virtuellen Objekts (825) umfasst.

11. Verfahren nach Anspruch 10,
**dadurch gekennzeichnet, dass**
der Schritt des Abschätzens der Position des virtuellen Objekts ein Tiefpassfilter verwendet.

**12.** Computer-Programm mit Anweisungen, die zum Durchführen eines jeden der Schritte des Verfahrens nach einem der vorangehenden Ansprüche geeignet sind.

**13.** Mittel zum Speichern von Informationen, das abnehmbar oder nicht abnehmbar ausgeführt ist und teilweise oder vollständig von einem Computer oder einem Mikroprozessor lesbar ist, mit Computer-Programmcode-Anweisungen zum eines zum Durchführen eines jeden der Schritte des Verfahrens nach einem der Ansprüche 1 bis 11.

**14.** Vorrichtung erweiterter Realität, die an zumindest eine Videokamera und an zumindest einen Bildschirm angeschlossen werden kann, wobei die Vorrichtung Mittel aufweist, die geeignet sind, jeden der Schritte des Verfahrens nach einem der Ansprüche 1 bis 11 durchzuführen.

**15.** Vorrichtung nach Anspruch 14, enthaltend Mittel zum Abspeichern des zumindest einen ersten Bildes des Bilderstroms (210) und Mittel zum Abspeichern der dreidimensionalen Darstellung des zumindest einen virtuellen Objekts.

Fig. 1

Fig. 2

EP 2 104 925 B1

Fig. 3

Fig. 5a

Fig. 4

105

300'

125

115

305

Fig. 5b

Fig. 6

600

710

615

135"

705

310

700

(a)

715

700

720

710

Lumière

135"

Batterie
Lithium

Capteur d'orientation

Module
HF

705

(b)

Boutons

310

710

Lumière

135"

Capteur d'orientation

725

Boutons

310

(c)

Fig. 7

EP 2 104 925 B1

```
┌ ─ ─ ─ ─ ─ ─ ─ ─ ─ ─ ─ ─ ┐
│      Définition des seuils      │        ⌐ 800
└ ─ ─ ─ ─ ─ ─ ─ ─ ─ ─ ─ ─ ┘
```

┌──────────────────────────┐
│      Conversion de l'image       │        ⌐ 805
│         RGB -> HS'L             │
└──────────────────────────┘

┌──────────────────────────┐
│       Segmentation de            │        ⌐ 810
│           l'image                │
└──────────────────────────┘

┌──────────────────────────┐
│       Extraction des             │        ⌐ 815
│          contours                │
└──────────────────────────┘

825

┌──────────────────────────┐          ┌──────────────────────────┐
│      Estimation de               │          │      Détermination de            │        ⌐ 820
│   la position cherchée           │          │   la position cherchée           │
└──────────────────────────┘          └──────────────────────────┘

┌──────────────────────────┐
│      Validation de la            │        ⌐ 830
│          position                │
└──────────────────────────┘

# Fig. 8

Fig. 9

Fig. 10

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040179104 A
- US 20040179107 A
- WO 2004012445 A


**Littérature non-brevet citée dans la description**

- **VANIA CONAN ; PASCAL BISSON.** Two-step fusion method for augmented reality. *SPIE,* vol. 3206
- **ULRICH NEUMANN ; SUYA YOU ; YOUNGKWAN CHO ; JONGWEON LEE ; JUN PARK.** *Augmented reality tracking in natural environments*
- **A. STATE et al.** Superior augmented reality registration by integrating landmark trasking and magnetic tracking. *Computer graphics proceedings, annual conference séries,* 1996